# EUROPEAN PATENT APPLICATION

(11) **EP 2 695 845 A1**
(43) Date of publication of application: **12.02.2014**
(21) Application number: 12179597.5
(22) Date of filing: 07.08.2012
(51) Int. Cl.: B66F 9/08, B66F 9/06

(54) **Apparatus for lifting shelves**

(71) Applicant: Eden, a Trading Division of The Marmon Group Limited, Northamptonshire NN8 6GR (GB)
(72) Inventor: Aitcheson, Stephen, Wellingborough, Northamptonshire NN8 6GR (GB); Mann, Jason, Wellingborough, Northamptonshire NN8 6GR (GB)
(74) Representative: McKinnon, Alistair James

(57) **Abstract**

The present invention relates to an apparatus (10) for lifting shelves (30) comprising: a base (12) comprising a ground engaging element arrangement for permitting the apparatus to be moved; a support frame (14) extending transversely to said base (12) along a first axis, said support frame (14) comprising at least one support member (18) extending transversely to said support frame (14) along a second axis and arranged for receiving a shelf (30) thereon; an actuator (20) operative to move said at least one support member (18) transversely relative to said base (12) in both directions along said first axis.

## Description

This invention relates to an apparatus for lifting shelves and, in particular, but not exclusively, to an apparatus for lifting one shelf or multiple shelves simultaneously from a display arrangement, such as a gondola, for moving the shelves to another location, and for returning the shelves to the display arrangement. The apparatus may be suitable for lifting and moving multiple merchandise-loaded shelves simultaneously.

Gondola-type shelving is commonly used in many stores as an arrangement for displaying. A gondola may have a number of upright posts to which horizontal shelves are attached for displaying merchandise. The gondola conventionally has a horizontal base support which comprises a number of feet configured for location on a store floor. The horizontal base support extends from the base of each upright post to stabilize the post. A bottom or lower shelf may be placed over the horizontal base support for additional display space. In such a shelving system, shelves and horizontal base supports may extend from two opposite sides of the upright posts, with a wall extending between and connected to the upright posts.

Retail merchandising may require occasional rearrangement of shelves and or goods on merchandise display gondolas located in store aisles. For example, this may be for the purpose of accommodating new merchandise displays or for stimulating customer interest. Also, when re-stocking merchandise to replenish depleted stocks, it may be necessary to remove all remaining merchandise from shelves, add replenishment stocks to the shelves, and replace the removed merchandise. The process of removing merchandise from shelves will be referred to hereinafter as "de-merchandising" and the process of putting merchandise back onto shelves will be referred to hereinafter as "re-merchandising".

During de-merchandising and/or re-merchandising, it may be necessary to locate a merchandise trolley (or "cage") in proximity to the shelves being de-merchandised and/or re-merchandised. The merchandise trolley provides a convenient temporary location for merchandise to be stored during de-merchandising and/or re-merchandising. However, the need for the merchandise trolley to be within convenient reach of a store worker conducting the de-merchandising and/or re-merchandising may require that the merchandise trolley be located in a store aisle. As will be appreciated, this may cause disruption in store because the merchandise trolley may at least partially block the store aisle where it is located. Also, it may be necessary for the store worker to lift merchandise items from the merchandise trolley and convey them to the shelves during re-merchandising, and vice versa during de-merchandising. Such acts may cause injury to the store worker if the merchandise is particularly heavy and/or if such acts are repetitious and/or if the store worker overreaches to place merchandise on a high shelf or remove merchandise from a high shelf.

Should it be necessary to dismantle a gondola entirely, then it is currently necessary to de-merchandise shelves, then remove the shelves from the gondola, then dismantle the remainder of the gondola. The de-merchandising and removal of the shelves are carried out manually. This manual process, as will be appreciated, is time consuming and, consequently, may not be cost-efficient for the store.

In other instances, rather than dismantling of a gondola entirely, it may be necessary simply to re-arrange the shelves such that there is a different spacing between adjacent pairs of shelves. However, to achieve this it is necessary to de-merchandise shelves, then remove the shelves from the gondola, replace the shelves with the desired spacing therebetween, then re-merchandise the shelves. De-merchandising and removal of the shelves, replacement of the shelves, and re-merchandising are carried out manually. Again, this process is time consuming and, consequently, is not cost-efficient for the store.

One or more aspects of the present invention contemplate the application of an apparatus for lifting shelves to remove shelves from a display arrangement, move the shelves to another location (e.g. for de-merchandising and re-merchandising), and returning the re-merchandised shelves to the same or another display arrangement.

One or more aspects of the present invention have been devised with the foregoing in mind.

According to an aspect of the invention, there is provided an apparatus for lifting shelves comprising: a base comprising a ground engaging element arrangement for permitting the apparatus to be moved; a support frame extending transversely to said base along a first axis, said support frame comprising at least one support member extending transversely to said support frame along a second axis and arranged for receiving a shelf thereon; an actuator operative to move said at least one support member transversely relative to said base in both directions along said first axis.

The apparatus may be useful in assisting the lifting of one or more shelves, with or without merchandise located thereon, from an existing store fixture such as a gondola/shelving system. It may also be used to move the one or more shelves (including any merchandise) away from the existing fixture to a remote location to allow for de-merchandising and/or re-merchandising to take place, thereby potentially reducing disruption within the store. The apparatus may also be useful in allowing a fixture to be dismantled more quickly.

The apparatus may also be useful in allowing a shelf (or shelves) borne thereon to be positioned at a more convenient height for a store worker to conduct a de-merchandising and/or re-merchandising process.

Optionally, the actuator is operative to displace the at least one support member from a start location in a first direction along the first axis to an end location spaced from the start location, and further operative to return the at least one support member so displaced to the start location.

The actuator may optionally comprise a quick-release element operative to release the at least one support member displaced from its start location to the start location, thereby enabling return of the at least one displaced support member to the start location.

Optionally, the at least one support member is moveable relative to the support frame by the actuator and/or the at least one support member is moveable relative to the base by the actuator.

The apparatus may further comprise at least one adjustment element associated with the at least one support member, the at least one adjustment element operative to adjust the location of the at least one support member along the support frame.

The adjustment element provides an adjustable height mechanism to adjust the height of the at least one support member so that the apparatus can be configured for interaction with a shelf or shelves at any height. In arrangements where there are more than one support member, the adjustment element further provides a mechanism for adjusting the spacing between adjacent support members so that the apparatus can be configured for interaction with a number of shelves with a particular spacing (or spacings) therebetween and the height of the shelves. Thus, the apparatus may be configured to lift any type of shelving system pitch

Optionally, the at least one support member may be removable from the support frame, and the support frame may comprise a series of engagement elements at locations therealong, an engagement element at each location being arranged for releasably engaging co-operative engaging elements located on the at least one support member.

Optionally, the at least one support member may comprise a planar element and/or wherein the at least one support member may comprise at least a pair of arms spaced apart across the support frame.

The support frame may comprise a plurality of the support members located in a fixable spaced relationship at intervals along the support frame. Optionally, the plurality of support members may be moveable relative to one another to alter spacing between adjacent members.

The apparatus may therefore be suitable for lifting an entire bay of shelving complete with merchandise/products in a single movement, and may be suitable for moving the shelves complete with products from one location to another.

Optionally, the support frame may comprise two spaced-apart longitudinal elements upstanding from the base. Each of the longitudinal elements may be telescopically connected to corresponding cooperative elements located on the base, and further wherein the longitudinal elements of the support frame may be arranged for telescopic movement relative to the corresponding cooperative elements of the base.

Optionally, the actuator may comprise a ram and pump arrangement, the pump being user operable and the ram being connected via a linkage to the support frame or the at least one support member and arranged to be driven by the pump to cause movement of the support frame and/or the at least one support member relative to the base. The ram and pump arrangement may comprise a hydraulic and/or pneumatic arrangement.

Optionally, the actuator may comprise, or may further comprise, a motor and linkage arrangement, the motor being user operable and the linkage being connected to the support frame and/or the at least one support member and arranged to be driven by the motor to cause movement of the support frame and/or the at least one support member relative to the base. The linkage may comprise at least one of: a chain and gear arrangement; a belt and roller arrangement; a rack and gear arrangement; and a travelling screw arrangement.

One or more embodiments of the invention are described further hereinafter, by way of example only, with reference to the accompanying drawings in which:
Fig. 1 illustrates a schematic side view of an apparatus for lifting shelves according to one or more embodiments of the present invention;
Fig. 2 illustrates a schematic perspective view of the apparatus of Fig. 1;
Fig. 3 illustrates a schematic side view of the apparatus of Figs. 1 & 2 in operation;
Fig. 4 illustrates a schematic side view of the apparatus of Figs. 1 & 2 in operation;
Fig. 5 illustrates a schematic side view of the apparatus of Figs. 1 & 2 in operation;
Fig. 6 illustrates an optional arrangement for securing support members of the apparatus to a support frame of the apparatus; and
Fig. 7 illustrates an optional set of components for enabling operation of the apparatus.

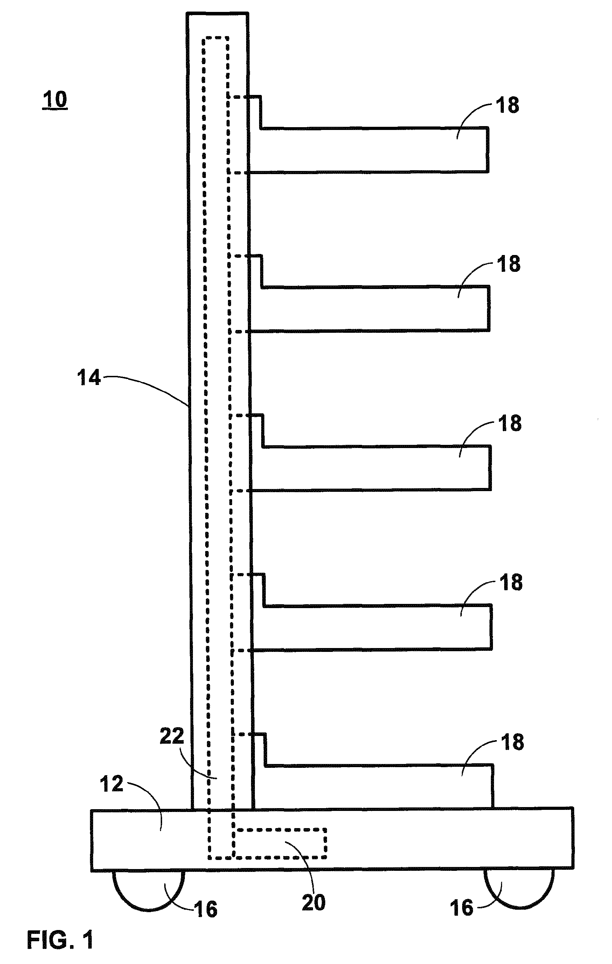

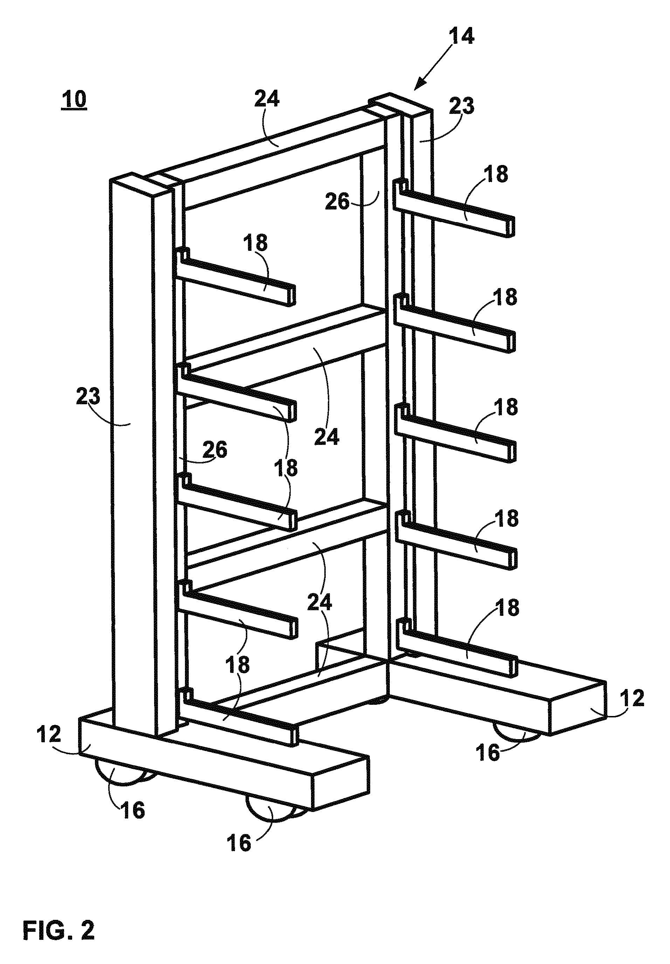

In Figs. 1 and 2, there is illustrated a shelf lifting apparatus 10 which comprises a base 12, the support frame 14, rolling elements 16, support members 18, and a lifting mechanism comprising an actuator 20 and actuator coupling 22.

The support frame 14 is secured to base 12 and extends transversely therefrom along a first axis so that, in a normal orientation, the support frame 14 upstands from the base 12.

From Fig. 2, it can be seen that the base 12 comprises discrete elements linked together to form a base frame. However, the form of the base 12 is optional and could also be, for example, a planar element. Any suitable arrangement could be used provided that it allows the base to provide sufficient support to the apparatus.

An arrangement of ground engaging elements is provided which are arranged to allow the apparatus to be moved. The ground engaging elements comprise a plurality of rolling elements 16 which are fixed to the underside of the base 12 to assist movement of the base 12, and thus the shelf lifting apparatus 10. The rolling elements 16 may comprise wheels, casters, rollers, or any other suitable means which enable the base 12 to be moved.

The support frame 14 has extending transversely therefrom along a second axis a plurality of support members 18. These support members 18 extend from the support frame 14 substantially in the same plane as the base 12.

As can be seen from Fig. 2, the support frame 14 comprises two uprights 23 which extend upwardly from the base 12. The two uprights 23 are spaced apart with a plurality of cross-members 24 located therebetween and connected to each upright 23. The cross-members 24 may serve to add rigidity to the support frame 14 and also may serve to maintain the spaced relationship between the two uprights 23 over their length.

Inwardly facing portions of the uprights 23 comprise support member engagement portions 26. It is to the support member engagement portions 26 that the plurality of support members 18 is attached. A number of said plurality of support members 18 are attached to one of the support member engagement portions 26, and the remainder of the plurality of support members 18 are attached to the other support member engagement portion 26. The support members 18 are located at spaced intervals over the length of each support member engagement portion 26. A particular support member 18 located on one support member engagement portion 26 will be at substantially the same level as a support member 18 located on the other support member engagement portion 26. Other "pairs" of support members 18 are similarly arranged at spaced intervals on the support member engagement portions 26.

Although the support members 18 illustrated in the figures comprise arms, each pair of support members 18 may be replaced by a planar element running between the support member engagement portions 26 in optional arrangements.

The plurality of support members 18 are moveable transversely relative to said base 12 in both directions along said first axis. Such movement is achieved by operation of the actuator 20 which is linked to the plurality of support members 18 by way of actuator coupling 22 and support member engagement portions 26. The support members 18 are movable in concert so that a fixed spaced relationship is maintained between each pair of support members 18 when they are moved along the first axis.

Movement of the plurality of support members 18 relative to the base 12 may be achieved by moving the support members 18 relative to the support frame 14 (and thus also relative to the base 12) and/or by moving the support frame 14 relative to the base 12 (and consequently moving the support members 18 relative to the base 12).

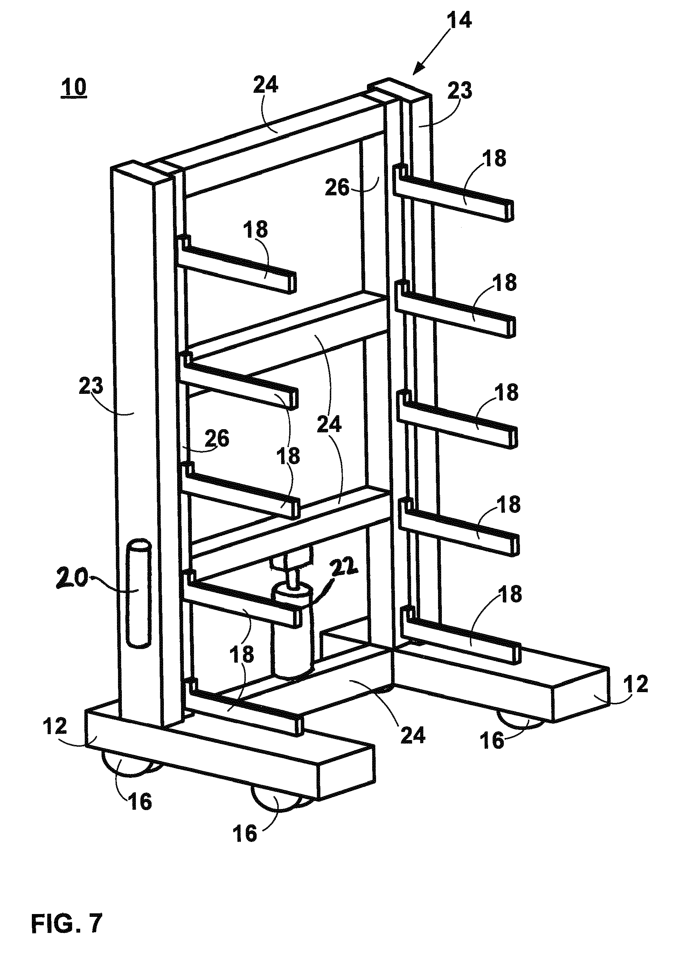

Further details of components which may comprise the actuator 20 and actuator coupling 22 will be discussed later in relation to Fig. 7.

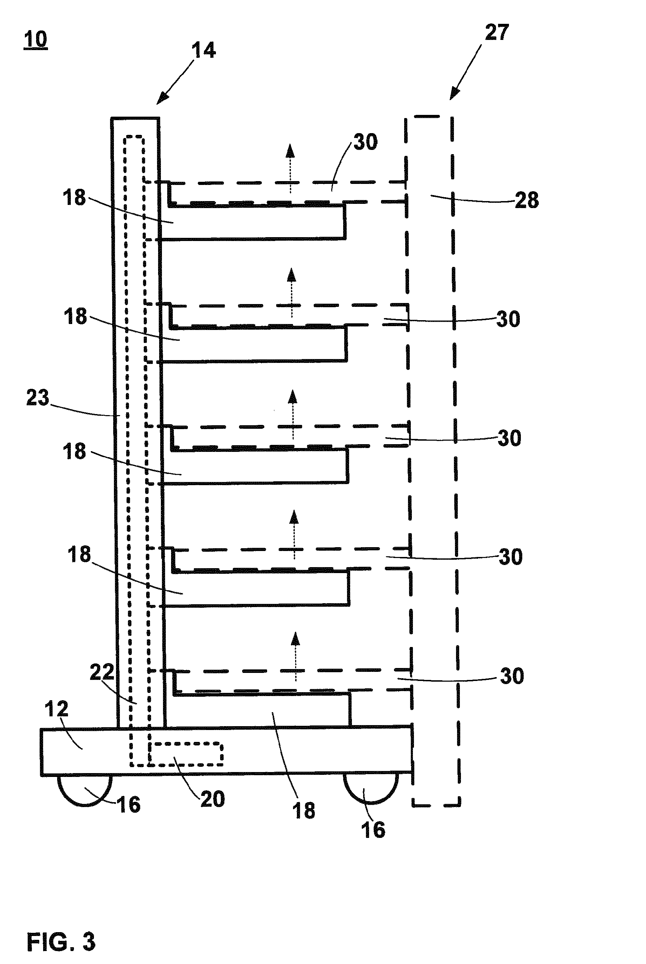

Figs. 3 to 5 illustrate how the shelf lifting apparatus 10 may be used to lift a plurality of shelves from a merchandise display (such as a gondola/shelving system).

In the illustrated arrangements of Figs. 3 to 5, there is shown a gondola 27 comprising an upright 28 (or series of uprights 28) from which extend a plurality of shelves 30 at spaced intervals over the height of the upright 28. For clarity, shelves 30 are shown only on one side of the upright 28, but it may be the case that a further plurality of shelves extends from an opposite side of the upright.

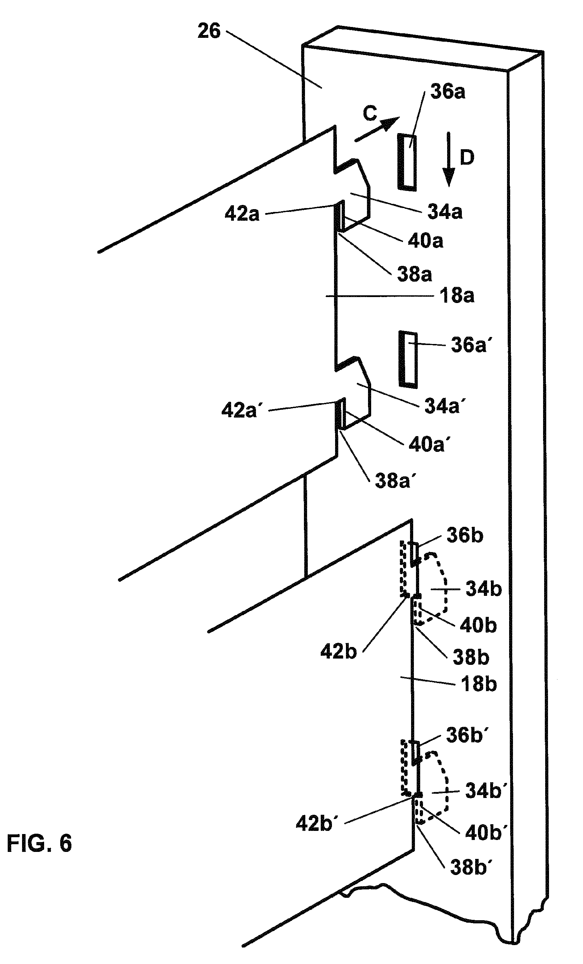

The shelf lifting apparatus 10 may be guided by an operator into position in front of a bay of a plurality of shelves 30 of the gondola 27. In this position, the support members 18 will face the plurality of shelves 30 extending from the upright 28. Once the shelf lifting apparatus 10 is so positioned, the operator will be able to determine if any adjustment in height of the pairs of support members 18 is required to ensure that at least some pairs of support members 18 can each be slid underneath a shelf 30 extending from the gondola 27. An arrangement for adjusting the height of the support members 18 is illustrated in Fig. 6 and is described further in relation to that figure.

When the heights of the pairs of the support members 18 have been suitably adjusted, the operator can push the shelf lifting apparatus 10 towards the gondola 27 such that different pairs of the support members 18 pass beneath different shelves 30 of the gondola 27. Movement of the shelf lifting apparatus 10 towards the gondola 27 in this manner can be continued until ends of the shelves abut with stops (not shown) located on the shelf lifting apparatus 10. The location of the shelf lifting apparatus 10 in this position is illustrated in Fig. 3.

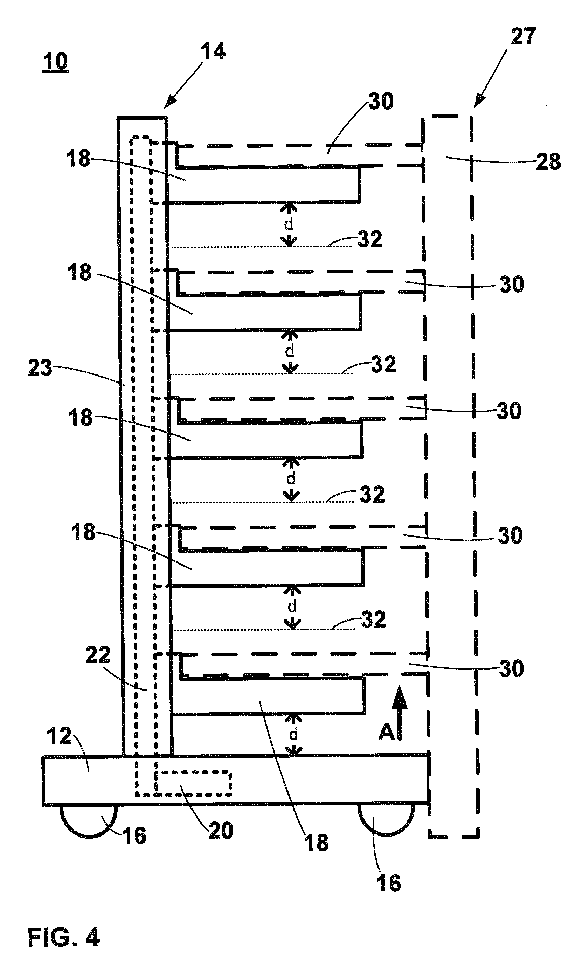

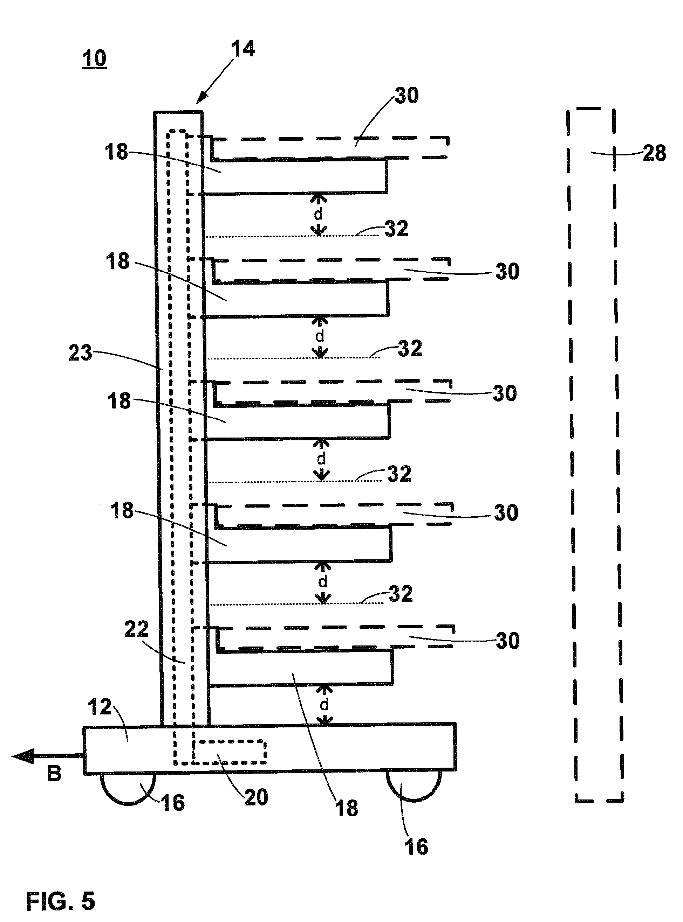

With the shelf lifting apparatus 10 located in the position illustrated in Fig. 3, the lifting mechanism can be operated to move each pair of support members 18 upwards (as illustrated by upwardly directed arrows in Fig. 3 and arrow A in Fig. 4). This movement causes upper surfaces of the support members 18 of each pair to meet with an underside of a shelf 30 which the respective pair is located beneath. Continued movement in the direction indicated by arrow A lifts the shelves 30 relative to the upright 28 of the gondola 27. Thus, the upward movement displaces each shelf 30 by a distance d from a start position 32. Sufficient upward movement of the shelves 30 relative to the upright 28 causes the co-operative engaging elements between the shelves 30 and upright 28 to disengage. At that point, the weight of the shelves 30 (and the weight of any merchandise located upon the shelves 30) is borne by the support members 18 of the shelf lifting apparatus 10. When this stage has been reached, the shelf lifting apparatus 10 can be moved away from the upright 28 of the gondola 27 taking the shelves 30 with it. This movement is indicated by arrow B in Fig. 5.

The shelf lifting apparatus 10 may then be moved to a remote location to permit de-merchandising and/or re-merchandising to take place.

The shelf lifting apparatus 10 is also suitable to return shelves to a gondola, and this may be achieved by reversing the steps described above and as illustrated in Figs. 3 to 5. The actuator may include a quick-release element to allow a raised shelf or set of shelves in the position illustrated in Fig. 4 to be returned to the start-position illustrated in Fig. 3

Fig. 6 illustrates in detail a particular arrangement by which the support members 18 can be releasably mounted upon the support member engagement portions 26 of support frame 14.

In the illustrated arrangement of Fig. 6, there is shown one support member engagement portion 26, a first support member 18a, and a second support member 18b. For the purposes of clarity, only portions of these features are illustrated.

The first support member 18a is illustrated in a "disengaged" position and the second support member 18b is mounted on, and supported by, the support member engagement portion 26 (i.e. in an "engaged" position).

The first support member 18a and second support member 18b are releasably mountable upon the support member engagement portion 26 by way of support member engagement elements 34a, 34a', 34b, 34b' cooperating with engagement elements 36a, 36a', 36b, 36b' respectively located on support member engagement portion 26. For convenience, "support member engagement elements 34a, 34a', 34b, 34b'" will hereinafter be referred to as "hooks 34a, 34a', 34b, 34b'", and "engagement elements 36a, 36a', 36b, 36b'" will hereinafter be referred to as "slots 36a, 36a', 36b, 36b'".

First hook 34a and second hook 34a' of first support member 18a extend rearward from a rear surface of the first support member 18a. The rear surface of the support member is that which faces the support member engagement portion 26 when the support member is engaged with the upright. The hooks are configured for insertion into slots 36a, 36a' respectively of the support member engagement portion 26.

First hook 34a comprises a notch 38a formed in a lower edge thereof. The notch 38a defines a vertical surface 40a for engaging an inside surface of a face of the support member engagement portion 26 to which the first support member 18a is attachable. The vertical surface 40a will engage the inside surface at a position below the slot 36a into which the first hook 34a is to be inserted. The notch 38a also defines a horizontal surface 42a which is arranged to rest upon a lower edge of the slot 36a into which the first hook 34a is to be inserted.

Second hook 34a' comprises a similar arrangement of features as first hook 34a. However, these are denoted by the suffix reference letter "a'" instead of "a". Similarly, third hook 34b and fourth hook 34b' of second support member 18b extend rearward from a rear surface of the second support member 18b. These hooks are configured for insertion into slots 36b, 36b'.

Arrows C and D illustrate the two directions of movement of the first support member 18a that are required to move the first support member 18a from the illustrated "disengaged" position to an "engaged" position. That is, such as that of second support member 18b as illustrated in Fig. 6. Thus, as the end of the first support member 18a is introduced to the support member engagement portion 26, the first and second hooks 34a, 34a' are aligned with first and second slots 36a, 36a'. Further movement of the first support member 18a in the direction of arrow C causes the first and second hooks 34a, 34a' to be received within first and second slots 36a, 36a'. Movement of the first support member 18a toward the support member engagement portion 26 can continue in the direction of arrow C until a rear surface of the first support member abuts the surface of support member engagement portion 26. Once no further movement can be made in the direction of arrow C, the first support member 18a can be lowered into its "engaged" position by lowering the first support member 18a in the direction of arrow D. As will be appreciated, when located in this "engaged" position, the first support member 18a is securely mounted to the support member engagement portion through the co-operative engagement of the first hook 34a with first slot 36a, and second hook 34a' with second slot 36a'.

To disengage the first support member 18a (or any other support member) from its engaged position with respect to the support member engagement portion 26, the support member must first be moved in a direction opposite to that indicated by arrow D. It should then be moved in a direction opposite to that indicated by arrow C.

The support member engagement portion 26 may comprise a plurality of slots spaced at intervals over a length thereof. This can allow a plurality of support members 18 to be attached thereto. In an optional arrangement, the number of slots in the support member engagement portion 26 may be at least greater than the number of hooks on the plurality of support members 18 attached thereto. This can allow spacings between adjacent pairs of support members 18 to be adjusted so that the shelf lifting apparatus 10 can be configured to interact with gondolas having different shelf spacings.

Fig. 6 illustrates an optional arrangement for mounting support members 18 on the support member engagement portion 26 and in which the positions of the support members 18 relative to other support members 18 can be adjusted as required. The support members 18 are removably mountable on the support member engagement portion 26 in this particular arrangement, but may be fixedly mounted to the support member engagement portion 26 in other optional arrangements.

In a further optional arrangement, adjustment of the positions of the support members 18 relative to other support members 18 may be achieved by way of a travelling screw arrangement. Each or some of the plurality of support members 18 may be attached to the support member engagement portion 26 by way of a screw/bolt and nut arrangement. A number of screws may be located on the support member engagement portion 26 at spaced intervals along its length. The axes of the screws are arranged to point along the length of the support member engagement portion 26. Each support member 18 is provided with at least one nut supported at a rear surface thereof, the nut arranged such that an axis of its bore is in the same plane as an axis over the height of the support member 18. The support member 18 can be fixed to the support member engagement portion 26 by engagement of the nut with a screw/bolt located on the support member engagement portion 26. Adjustment of the position of the support member 18 relative to the support member engagement portion 26 in a longitudinal direction along the support member engagement portion 26 may be achieved by rotating the nut relative to the screw/bolt and/or vice versa. Of course, the respective locations of the nut and screw/bolt could be reversed such that the nut is located on the support member engagement portion 26 and the screw/bolt is located on the support member 18.

In yet further optional arrangements, a combination of fixedly mounted and removably mounted support members 18 may be employed, and which incorporate any one or more of the above described adjustment mechanisms, either alone or in combination.

Fig. 7 illustrates a particular set of components which may comprise the actuator 20 and actuator coupling 22 in an optional arrangement.

In the illustrated arrangement, the actuator 20 comprises a hydraulic pump and the actuator coupling 22 comprises a hydraulic ram. One end of the hydraulic ram is attached to a portion of the base 12 and the other end is attached to a portion of the frame. In the particular arrangement illustrated, the hydraulic ram is coupled to the support member engagement portions 26 via a cross-member 24. Each of the support member engagement portions 26 is configured to be slidable relative to the respective upright 23 to which they are mounted. Thus, operation of the hydraulic pump drives the hydraulic ram and this, in turn, causes movement of the support member engagement portions 26 relative to the uprights 23 and based 12. Consequently, the plurality of support members 18 move upwards/downwards relative to the frame 14 and based 12 under operation of the hydraulic pump and ram.

In another optional arrangement, the support member engagement portions 26 may be fixedly attached to the uprights 23, and each of the uprights 23 may be configured to interact telescopically with a post upstanding from the base 12. In such an arrangement, both the uprights 23 and support member engagement portions 26 are slidable relative to the base 12.

Other actuator and actuator coupling components are contemplated in other optional arrangements. For instance, the actuator may comprise a motor operative to drive a set of wheels which, in turn, are coupled to a linear element in the frame and to which the support members are attached. In one optional arrangement, the wheels may comprise gears and the linear element a rack. In another optional arrangement, the wheels may comprise gears and the linear element a chain. Further, the wheels may be coupled to a linear element which comprises a belt.

Any references made herein to orientation (e.g. top, bottom, front and back) are made for the purposes of describing relative spatial arrangements of the features of the apparatus, and are not intended to be limiting in any sense.

It is to be understood that any feature described in relation to any one embodiment may be used alone, or in combination with other features described, and may also be used in combination with one or more features of any other of the embodiments, or any combination of any other of the embodiments.

As used herein, the terms "comprises," "comprising," "indudes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

The scope of the present disclosure includes any novel feature or combination of features disclosed therein either explicitly or implicitly or any generalisation thereof irrespective of whether or not it relates to the claimed invention or mitigate against any or all of the problems addressed by one or more embodiments of the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

## Claims

1. An apparatus for lifting shelves comprising:
- a base comprising a ground engaging element arrangement for permitting the apparatus to be moved;
- a support frame extending transversely to said base along a first axis, said support frame comprising at least one support member extending transversely to said support frame along a second axis and arranged for receiving a shelf thereon;
- an actuator operative to move said at least one support member transversely relative to said base in both directions along said first axis.

2. An apparatus according to claim 1, wherein said actuator is operative to displace said at least one support member from a start location in a first direction along said first axis to an end location spaced from said start location, and further operative to return said at least one support member so displaced to said start location.

3. An apparatus according to claim 2, wherein said actuator comprises a quick-release element operative to release said at least one support member displaced from its start location to said start location.

4. An apparatus according to any preceding claim, wherein said at least one support member is moveable relative to said support frame by said actuator.

5. An apparatus according to any preceding claim, wherein said at least one support member is moveable relative to said base by said actuator.

6. An apparatus according to any preceding claim, further comprising at least one adjustment element associated with said at least one support member, said at least one adjustment element operative to adjust the location of the at least one support member along the support frame.

7. An apparatus according to any preceding claim, wherein said at least one support member is removable from said support frame, and said support frame comprises a series of engagement elements at locations therealong, an engagement element at each location being arranged for releasably engaging co-operative engaging elements located on said at least one support member.

8. An apparatus according to any preceding claim, wherein said at least one support member comprises a planar element.

9. An apparatus according to any one of claims 1 to 7, wherein said at least one support member comprises at least a pair of arms spaced apart across said support frame.

10. An apparatus according to any preceding claim, wherein said support frame comprises a plurality of said support members located in a fixable spaced relationship at intervals along said support frame.

11. An apparatus according to claim 10, wherein said plurality of support members are moveable relative to one another to alter spacing between adjacent members.

12. An apparatus according to any preceding claim, wherein said support frame comprises two spaced apart longitudinal elements upstanding from said base.

13. An apparatus according to claim 12, wherein each of said longitudinal elements is telescopically connected to corresponding cooperative elements located on said base, and further wherein said longitudinal elements of said support frame are arranged for telescopic movement relative to said corresponding cooperative elements of said base.

14. An apparatus according to any preceding claim, wherein said actuator comprises a ram and pump arrangement, said pump being user operable and said ram being connected via a linkage to said support frame or said at least one support member and arranged to be driven by said pump to cause movement of said support frame and/or said at least one support member relative to said base.

15. An apparatus according to claim 13, wherein said ram and pump arrangement comprises a hydraulic and/or pneumatic arrangement.

16. An apparatus according to any one of claims 1 to 15, wherein said actuator comprises a motor and linkage arrangement, said motor being user operable and said linkage being connected to said support frame and/or said at least one support member and arranged to be driven by said motor to cause movement of said support frame and/or said at least one support member relative to said base.

17. An apparatus according to claim 16, wherein said linkage comprises at least one of: a chain and gear arrangement; a belt and roller arrangement; a rack and gear arrangement; and a travelling screw arrangement.
